# EUROPEAN PATENT APPLICATION

(11) **EP 4 568 003 A1**
(43) Date of publication of application: **11.06.2025**
(21) Application number: 23883169.7
(22) Date of filing: 27.10.2023
(51) Int. Cl.: H01M 50/538, H01M 50/169, H01M 50/179, H01M 50/107, H01M 50/152

(54) **WELD STRUCTURE OF BATTERY CAN AND CAP, AND BATTERY CELL EMPLOYING SAME**

(30) Priority: 27.10.2022 KR 20220140254; 02.06.2023 KR 20230071732
(71) Applicant: LG Energy Solution, Ltd., Seoul 07335 (KR)
(72) Inventor: HWANG, Dongsung, Daejeon 34122 (KR); SHIN, Hangsoo, Daejeon 34122 (KR); CHO, Sungmin, Daejeon 34122 (KR); HONG, Taerim, Daejeon 34122 (KR); PARK, Jeongho, Daejeon 34122 (KR)
(74) Representative: Goddar, Heinz J.
(86) International application number: PCT/KR2023/016891
(87) International publication number: WO 2024/091065

(57) **Abstract**

The present invention relates to a welding structure of a battery can and a cap, and a battery cell having the same applied thereto. The battery cell includes: a can having a bottom member and a sidewall member connected to the bottom member and extending in the axial direction; an electrode assembly accommodated in the can; and a cap covering an open end provided at one axial end of the sidewall member. A terminal connecting part extending toward axial outer side and in contact with and electrically connected to an inner circumferential surface of the sidewall member is provided at a radial outer edge of a current collector plate connected to an electrode of the electrode assembly and disposed at the open end. A weld portion where the inner circumferential surface of the sidewall member and an outer circumferential surface of the cap are welded with at least a portion of the terminal connecting part interposed therebetween.

## Description

### TECHNICAL FIELD

This application claims the benefit of priority based on Korean Patent Application No. 10-2022-0140254 filed on October 27, 2022 and Korean Patent Application No. 10-2023-0071732 filed on June 2, 2023, entire content disclosed in the document of the patent applications is included as a part of this specification.

The present invention relates to a welding structure of a battery can and a cap, and a battery cell having the same applied thereto.

### BACKGROUND ART

The process of manufacturing a battery cell using a cylindrical can includes: subjecting a metal sheet to deep drawing to form a circular bottom member and a circular tube-shaped sidewall member connected to the circular bottom member; accommodating an electrode assembly in the cylindrical can; and then covering an open end of the sidewall member with a cap.

Meanwhile, a current collector plate in contact with and electrically connected to the electrode tab of the electrode assembly is provided at the one of the two axial ends of the electrode assembly that facing the open end. The current collector plate is in contact with and electrically connected to the cap or the sidewall member by welding etc.

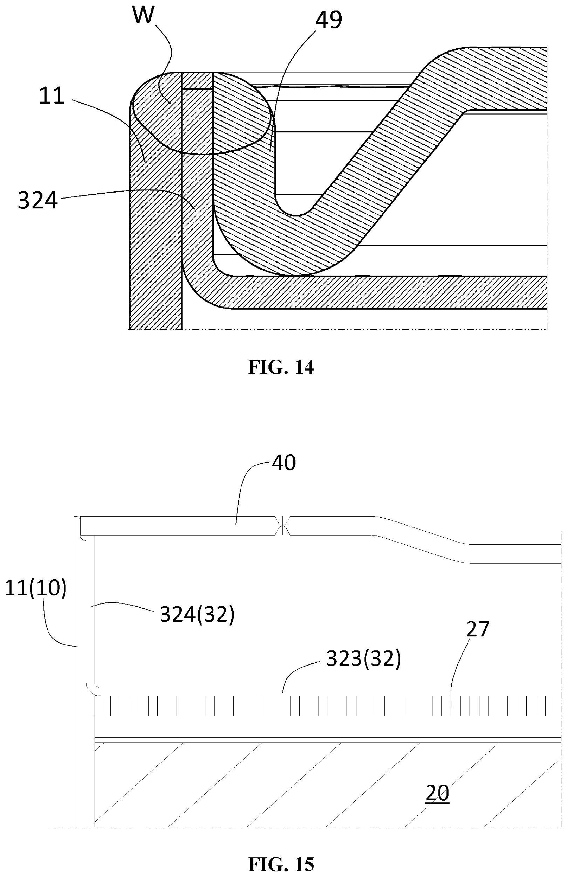

Referring to FIG. 15, in order to maintain close contact between the current collector plate 32 and the cap 40 or the sidewall member 10 in the process of welding the current collector plate 32 to the cap 40 or the sidewall member 10, a jig for maintaining the close contact between the current collector plate 32 and the cap 40 or the sidewall member 10 is necessary, and a mask exposing a weld area is also necessary.

In order to bring the current collector plate into close contact with the cap or the sidewall member through the mask or jig, a space for accommodating the mask or the jig must be provided inside the can. However, such pace remains empty after the mask or the jig is removed, resulting in a problem in which the internal volume of the can cannot be efficiently utilized, which is a factor that degrades the design of increasing the energy density per unit volume of the can.

In addition, in closing the open end of the cylindrical can, a process of connecting the current collector plate with the cap or the sidewall member and a process of connecting the cap to the sidewall member are performed. Such increase in man-hours reduces the production efficiency of cylindrical battery cells and increases the production cost.

Meanwhile, when the welding heat generated during the welding of the can and the cap is conducted to the electrode assembly accommodated in of a can, there is a risk of deterioration of the separator and deformation or decomposition of the internal structure. Therefore, such welding heat must be prevented from being conducted to the electrode assembly.

### SUMMARY OF THE INVENTION

In order to solve the above-described problems, the present invention provides a welding structure of a can and a cap and a battery cell with the welding structure applied thereto wherein design for increasing energy density per unit volume of the can without wasting the inner space of the can is possible in welding the current collector plate provided at the open end of the can to the can.

In addition, the present invention provides a welding structure of a can and a cap and a battery cell with the welding structure applied thereto wherein the production efficiency of the cylindrical battery cell is increased and the production cost is lowered by integrating the process of welding the current collector plate to the can and the process of welding the cap to the sidewall member into a single welding process.

In addition, the present invention provides a welding structure of a can and a cap and a battery cell with the welding structure applied thereto wherein a jig for applying pressure to the current collector plate for welding of the current collector plate by allowing the cap to function as a jig to apply pressure to the current collector plate.

In addition, the present invention provides a welding structure of a can and a cap and a battery cell with the welding structure applied thereto wherein damage to the electrode assembly caused by heat is minimized by dissipating heat generated during the welding of the can and the cap through the current collector plate.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

In order to solve above-describe problem, the present invention may be applied to a battery cell including: a can having a sidewall member extending in axial direction; an electrode assembly accommodated in the can; and a cap covering an open end provided at one axial end of the sidewall member.

The bottom member may have a flat circular shape, and the sidewall member may have a circular tube shape. The can may be formed by deep drawing a nickel (Ni) plated iron sheet.

The electrode assembly may be manufactured in the form of a jelly-roll wherein a first electrode, a separator, a second electrode and a separator are sequentially stacked and wound around the core axis thereof.

The electrode assembly may have a cylindrical shape.

The cap may be a circular plate made of metal material.

At one axial end of the electrode assembly, a current collector plate connected to the second electrode of the electrode assembly may be installed.

The current collector plate is placed at the open end of the can.

A terminal connecting part extending toward axial outer side and in contact with and electrically connected to an inner circumferential surface of the sidewall member is provided at a radial outer edge of a current collector plate.

Since the terminal connecting part extends in axial direction, a sufficient contact area between the terminal connecting part and the sidewall member may be secured.

The battery cell includes a weld portion where the inner circumferential surface of the sidewall member and an outer circumferential surface of the cap are welded with at least a portion of the terminal connecting part interposed between the inner circumferential surface of the sidewall member and the outer circumferential surface of the cap.

The current collector plate may include an electrode connecting part connected to a second electrode of the electrode assembly and extending in radial direction,

The terminal connecting part is disposed radially further outward than the electrode connecting part.

The terminal connecting part and the electrode connecting part may be connected through a bent part provided at a lower end portion of the terminal connecting part and changing an extending direction of the current collector plate.

The terminal connecting part may be provided in a portion of the current collector plate extending from the bent part toward axial outer side.

The sidewall member may extend axially further outward than the terminal connecting part of the current collector plate.

The portion of the sidewall member area extending axially further outward may be melted and penetrate into the weld portion during welding, thereby increasing the strength and the volume of the weld portion.

A diameter of an inner circumferential surface of a portion of the sidewall member extending axially further outward than the terminal connecting part of the current collector plate may be larger than that of an inner circumferential surface of the terminal connecting part.

Accordingly, the front end surface provided at the axial outer end of the terminal connecting part of the current collector plate is not obscured by the sidewall member from a position axially outer than the front end surface in axial direction.

This provides a path which allows the laser irradiated in axial direction to directly reach the terminal connecting part, thereby facilitating the welding of the cap, the can and the current collector plate. In addition, this facilitates center alignment and insertion of the cap by first guiding the insertion of the cap with the inner circumferential surface of the sidewall member of the can and then guiding the insertion of the cap with the inner circumferential surface of the terminal connecting part of the current collector plate.

The outer circumferential surface of the cap may be in contact with the inner circumferential surface of the terminal connecting part. Accordingly, the center of the cap with respect to the can may be aligned, and the terminal connecting part may be electrically connected to the cap.

A contact portion extending in axial direction and having an outer circumferential surface facing the inner circumferential surface of the sidewall member in radial direction may be provided at an edge of the cap.

Since the contact portion extends in axial direction, a sufficient contact area between the terminal connecting part and the contact portion may be secured.

The contact portion may extend axially further outward than the terminal connecting part of the current collector plate.

The portion of the contact portion extending axially further outward may be melted and penetrate into the weld portion during welding, thereby increasing the strength and volume of the weld portion.

A diameter of an outer circumferential surface of a portion of the contact portion extending axially further outward than the terminal connecting part of the current collector plate may be smaller than that of an outer circumferential surface of the terminal connecting part.

Accordingly, the front end surface provided at the axial outer end of the terminal connecting part of the current collector plate is not obscured by the contact portion from a position axially outer than the front end surface in axial direction.

This provides a path allowing the laser irradiated in axial direction to directly reach the terminal connecting part, thereby facilitating the welding of the cap, the can and the current collector plate.

The axial outer edge of the terminal connecting part may be disposed axially inner than the axial outer edge of the sidewall member and the axial outer edge of the contact portion.

Accordingly, the inner circumferential surface of the sidewall member and the outer circumferential surface of the contact portion may face each other in radial direction with a small gap therebetween at a position axially outer than the front end surface of the terminal connecting part.

The weld portion may be formed by welding at least an axial outer edge of the inner circumferential surface of the sidewall member, an axial outer edge of an outer circumferential surface of the contact portion, and an axial outer edge of the terminal connecting part.

A curved surface portion having a curved shape convex toward axial inner side may be connected to an axial inner side of the contact portion.

This curved surface portion provides an elastic force that allows the contact portion to be elastically deformed in radial direction. Accordingly, the curved surface portion of the cap may elastically compress the terminal connecting part of the current collector plate against the sidewall member.

The cap may be inserted into the can until the axial inner end of the curved surface portion interferes with the current collector plate in axial direction. As a result, the insertion depth of the cap into the open end may be regulated.

In addition, since the cap is forcibly press-fitted at a position radially inner than the terminal connecting part of the current collector plate, the curved surface portion may strongly press the current collector plate in axial direction.

That is, the cap may function as a jig that applies pressure to and fixes the current collector plate in both the axial and radial directions before welding.

A base portion extending flatly in radial direction may be provided at the cap to be radially inner than the curved surface portion.

The curved surface portion and the base portion may be connected through a first inclined portion extending axially outward as approaches radial inner side.

The first inclined portion additionally provides elastic force to the contact portion.

An axial outer side surface of the base portion may protrude axially further outward than the sidewall member and the contact portion. As a result, the base portion may protect the weld portion and function as a base surface of the battery cell.

A centripetal portion extending in radial direction may be provided at the cap to be radially inner than the base portion, and the base portion and the centripetal portion may be connected through a second inclined portion extending axially inward as approaches radial inner side.

Accordingly, the overall rigidity of the cap may be further increased.

The second inclined portion may have a slope gentler than the first inclined portion.

The steep slope of the first inclined portion provides elastic force in radial direction while the gentle slope of the second inclined portion is advantageous in securing the rigidity of the cap.

The present invention further provides a manufacturing method of a battery cell.

The manufacturing method includes: inserting a current collector plate into a can in a manner that an outer circumferential surface of a terminal connecting part of the current collector plate comes in contact with an inner circumferential surface of a sidewall member; inserting a cap into the can in a manner that an outer circumferential surface of the cap comes in contact with an inner circumferential surface of the terminal connecting part of the current collector plate inserted in the can; and forming a weld portion by irradiating a laser in axial direction onto an area where an outer circumferential surface of the sidewall member faces an inner circumferential surface of the can.

According to the present invention, the current collector plate is connected to an electrode tab provided at an end facing the open end among the two axial ends of the electrode assembly.

The current collector plate includes: an electrode connecting part extending in radial direction and in contact with and electrically connected to the electrode tab; and a terminal connecting part extending from the radial outer edge of the second electrode connecting part toward the axial outer side and electrically connected to the inner circumferential surface of the sidewall member.

The inner circumferential surface of the sidewall member and the outer circumferential surface of the cap are welded with at least a portion of the second terminal connecting part in axial direction interposed between the inner circumferential surface of the sidewall member and the outer circumferential surface of the cap.

As a result, the terminal connecting part of the current collector plate may be brought into contact with and electrically connected to the sidewall member and/or the cap as well as the welding of the can and the cap by a single process of welding the inner circumferential surface of the sidewall member and the outer circumferential surface of the cap.

The cap may have a contact portion extending in axial direction such that the outer circumferential surface thereof faces the inner circumferential surface of the sidewall member in radial direction.

The terminal connecting part of the current collector plate may be interposed between the inner circumferential surface of the sidewall member and the outer circumferential surface of the contact portion.

The axial outer edges of the inner circumferential surface of the sidewall member and the outer circumferential surface of the contact portion 4 may be welded by laser with the second terminal connecting part interposed therebetween.

Here, the axial outer edges of the inner circumferential surface of the sidewall member, the outer circumferential surface of the contact portion and the second terminal connecting part may be welded together by laser.

The axial inner end of the contact portion may be connected to a curved surface portion that extends radially inward as approaches axial inner side with gradually decreasing slope of tangent of the outer circumferential surface.

The insertion depth of the cap into the open end may be regulated by the axial inner end of the curved surface portion interfering with the electrode connecting part of the current collector plate.

A base portion extending flatly in radial direction may be provided at the cap to be radially inner than the curved surface portion. A first inclined portion extending axially outward as approaches radial inner side may be provided between the curved surface portion and the base portion.

Accordingly, the curved surface portion and the first inclined portion have a goose neck shape with excellent elastic restoring force such that elastic deformation in radial direction is facilitated. As a result, the curved surface portion may be elastically deformed and allow displacement of the contact portion toward the radial inner side when the cap is press-fitted into the open end such that the contact portion strongly compresses the terminal connecting part of the current collector plate toward the radial outer side. That is, the contact portion may function as a jig that brings the terminal connecting part into close contact with the sidewall member.

A centripetal portion extending in radial direction may be provided at the cap to be radially inner than the base portion, and a second inclined portion extending axially inward as approaches radial inner side may be provided between the base portion and the centripetal portion.

The slope of the first inclined portion may be greater than that of the second inclined portion. Accordingly, when the cap receives a load toward the radial inner side, the deformation is more concentrated on the first inclined portion than on the second inclined portion such that the contact portion may more reliably perform the function of a jig that compresses the terminal connecting part toward the sidewall member.

The axial outer edge of the terminal connecting part may be disposed axially further inward than those of the sidewall member and the contact portion.

The sidewall member and the cap may be made of the same metal material, for example, aluminum or steel.

The current collector plate may be made of metal material the same as the sidewall member and the cap.

Contrarily, the current collector plate may be made of a different metal material from the sidewall member and the cap, for example, copper.

As a result, the axial ends of the sidewall member and the cap are welded to each other, and the current collector plate may be maintained interposed therebetween even when made of different materials.

### BRIEF DESCRIPTION OF DRAWINGS

FIG. 1 is a perspective view of a cylindrical battery cell according to an embodiment.
FIG. 2 is an exploded perspective view of the electrode assembly accommodated in the can of FIG. 1 before winding.
FIG. 3 is a perspective view of the electrode assembly of FIG. 2 in a laminated state before winding.
FIG. 4 is a perspective view of a cylindrical jelly-roll shaped electrode assembly assembled by winding the laminate of FIG. 3.
FIG. 5 is a perspective view illustrating a first current collector plate bonded to an electrode tab of a first electrode of the electrode assembly.
FIG. 6 is a perspective view illustrating a second current collector plate bonded to an electrode tab of a second electrode of the electrode assembly.
FIG. 7 is a side cross-sectional view illustrating the process of accommodating in the can the electrode assembly to which the current collector plate is bonded.
FIG. 8 is a side cross-sectional view illustrating a bonding process of the first current collector plate and a first electrode terminal of the electrode assembly accommodated in the can.
FIG. 9 is a side cross-sectional view illustrating the process of covering the open end of the can containing the electrode assembly with a cap.
FIG. 10 is an enlarged cross-sectional view of the open end of a battery cell where the open end of the can is covered with the cap.
FIG. 11 is an enlarged cross-sectional view of an edge of a cap.
FIG. 12 is an enlarged cross-sectional view illustrating a cap being inserted into a can.
FIG. 13 is an enlarged view of a sidewall member, a current collector plate and a cap portion to be welded in the battery cell of FIG. 10.
FIG. 14 is a view illustrating a weld portion formed by welding the sidewall member, the current collector plate and the cap of FIG. 13.
FIG. 15 is a diagram illustrating coupled structure of a can and a current collector plate of a battery cell according to a comparative example.
FIG. 16 is a flowchart illustrating a manufacturing process of a battery cell according to the present invention.
FIGS. 17 and 18 illustrate a battery pack to which the battery cell of the embodiment is applied and a car equipped with the battery pack, respectively.

### DETAILED DESCRIPTION OF THE PREFERRED EMBODIMENTS

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

In the description of the embodiments, "axial direction" refers to "a direction in which the axis constituting the winding center of the jelly-roll type electrode assembly extends", and "radial direction" refers to "a direction toward (centripetal) or away (centrifugal) from the axis," and "circumferential direction" refers to "a direction surrounding the axis."

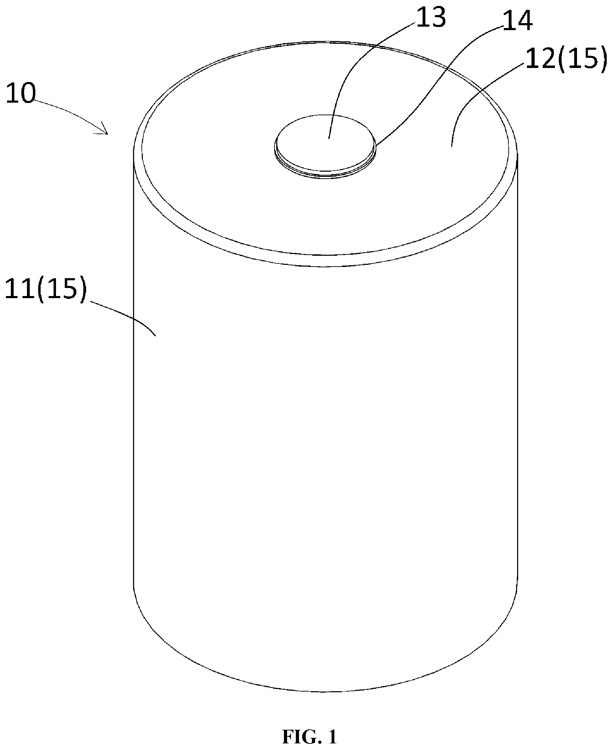

Hereinafter, an embodiment of a battery cell to which the welding structure of the present invention is applied will be described in detail with reference to FIGS. 1 to 13.

The battery cell of the embodiment may be, for example, a cylindrical battery cell whose form factor ratio (defined as the diameter of the cylindrical battery cell divided by the height, that is, the ratio of the diameter Φ to the height H) is greater than approximately 0.4.

Here, the form factor refers to values representing the diameter and the height of a cylindrical battery cell. The cylindrical battery cell to be applied to the pressure tester may be, for example, a 46110 cell, a 48750 cell, a 48110 cell, a 48800 cell or a 46800 cell. In the values representing the form factor, the first two numbers represent the diameter of the cell, the next two numbers represent the height of the cell, and the last number 0 represents that the cross-section of the cell is circular.

The battery cell to be applied to the pressure tester may be a cell that is approximately cylindrical with a diameter of approximately 46 mm, a height of approximately 110 mm and a form factor ratio of 0.418.

A battery cell according to another embodiment may be a cell that is approximately cylindrical with a diameter of approximately 48 mm, a height of approximately 75 mm and a form factor ratio of 0.640.

A battery cell according to yet another embodiment may be a cell that is approximately cylindrical with a diameter of approximately 48 mm, a height of approximately **110** mm and a form factor ratio of 0.436.

A battery cell according to yet another embodiment may be a cell that is approximately cylindrical with a diameter of approximately 48 mm, a height of approximately 80 mm and a form factor ratio of 0.600.

A battery cell according to another embodiment may be a cell that is approximately cylindrical with a diameter of approximately 46 mm, a height of approximately 80 mm and a form factor ratio of 0.575.

The pressure tester of the present invention may be apparently applied to battery cells with a form factor ratio of approximately 0.4 or less, for example, 18650 cells, 21700 cells, etc. For an 18650 cell, its diameter is approximately 18 mm, its height is approximately 65 mm, and the form factor ratio is 0.277. For a 21700 cell, its diameter is approximately 21 mm, its height is approximately 70 mm, and the form factor ratio is 0.300.

The battery cell of the embodiment includes an electrode assembly 20, current collector plates 31 and 32 electrically connected to the electrode assembly 20, and a can 10 accommodating therein the electrode assembly 20 and the current collector plates 31 and 32.

The can 10 includes a bottom member 12, and a sidewall member 11 connected to the bottom member 12 and extending in axial direction.

The open end provided at one axial end of the sidewall member 11 is covered and sealed with a cap 40 after accommodating the electrode assembly 20 in the can 10.

The bottom member 12 may have a disk shape with a hole provided in the center thereof, and the sidewall member 11 may have a circular tubular shape.

The bottom member 12 and the sidewall member 11 may be manufactured by forming a metal sheet with nickel-plated steel surface through a deep drawing process, and subjecting the sidewall member 11 to trimming process with a punch while holding the front end of the sidewall member with a blank holder. Apparently, the material of can 10 is not limited thereto.

A first electrode terminal 13 may be fitted into and coupled to the hole. The first electrode terminal 13 may be riveted and fixed to the bottom member 12 with a gasket 14 interposed therebetween. The gasket 14 is interposed between the first electrode terminal 13 and the bottom member 12 to seal the inside and the outside of the can 10 thereby preventing electrolyte leakage, and electrically insulating the first electrode terminal 13 and the bottom member 12.

However, the connection method between the first electrode terminal 13 and the bottom member 12 is not limited thereto. For example, when the structure is capable of sealing and electrically insulating the first electrode terminal 13 and the bottom member 12, various other fixing methods such as bolt-and-nut coupling method, glass seal method and chrome coating & PP-MAH heat bonding method are also applicable.

The first electrode terminal 13 may have a first polarity, and the can 10 may have a second polarity. That is, the bottom member 12 of the can 10, the sidewall member 11 connected thereto, and the cap 40 to be described later connected to the sidewall member 11 may all have the second polarity.

Accordingly, the battery cell may have both the first electrode terminal 13 and the second electrode terminal 15 disposed at the axial end where the bottom member 12 is provided, that is, at the closed end. As a result, the battery cell may have both a busbar connected to the first electrode terminal 13 and a busbar connected to the second electrode terminal 15 located at the top of the battery cell.

In one example, the first electrode terminal 13 may be a cathode terminal, and the second electrode terminal 15 may be an anode terminal. Apparently, it may be vice versa.

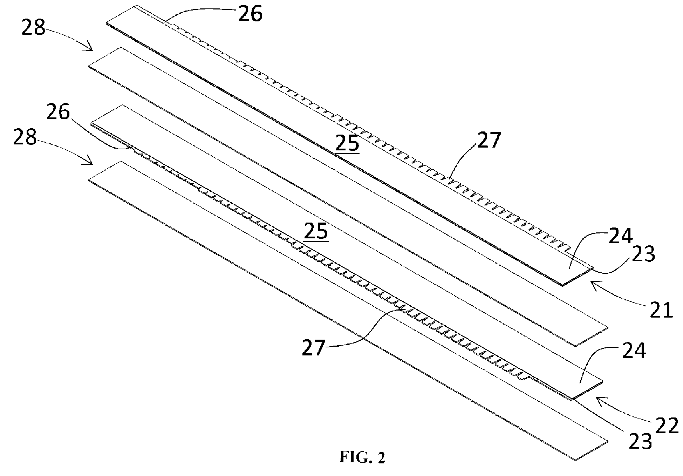

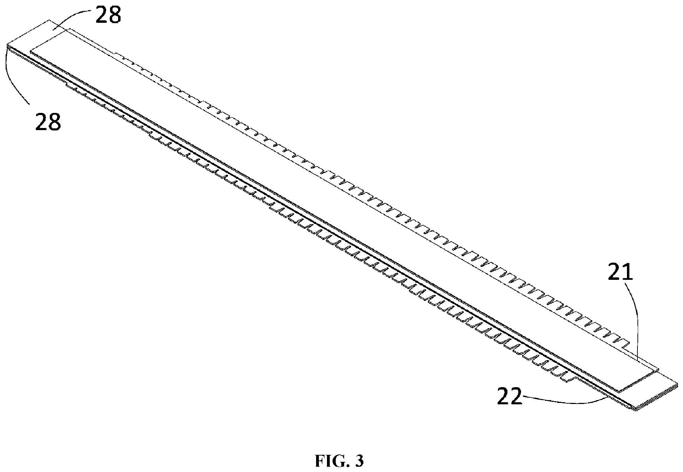

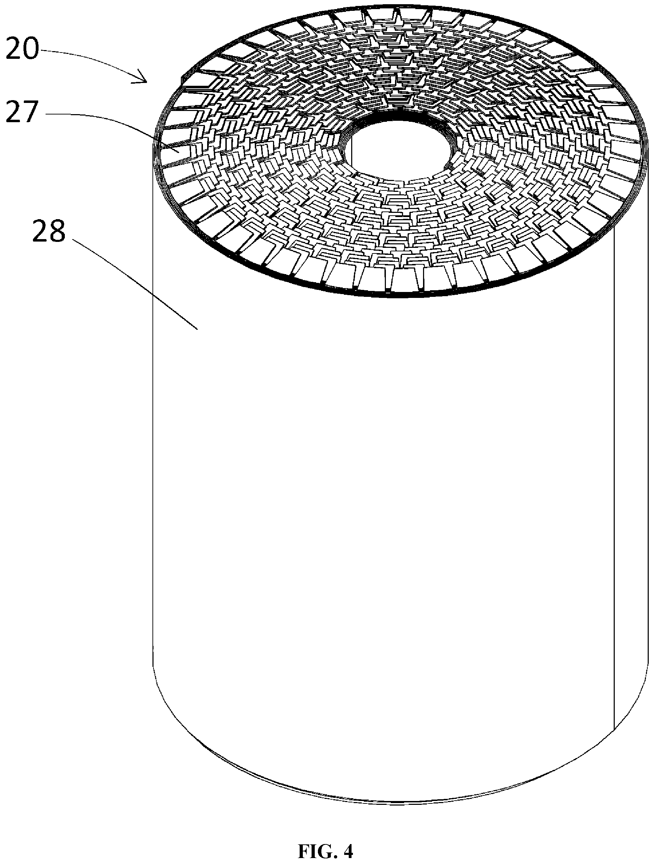

The electrode assembly 20 is accommodated in the can 10. The electrode assembly 20 is manufactured by preparing a first electrode 21, a second electrode 22 and separators 28 extending in a lengthwise direction with a predetermined width as shown in FIG. 2, forming a laminate by sequentially stacking the first electrode 21, the separator 28, the second electrode 22 and the separator 28 as shown in FIG. 3, and then coiling the laminate to have a shape of a jelly-roll wound around the core axis as shown in FIG. 4.

The first electrode 21 may be a cathode, and the second electrode 22 may be an anode. Apparently, it may be vice versa.

The first electrode 21 and the second electrode 22 are manufactured in the form of a sheet. The electrode sheet is manufactured by applying an active material layer 24 to the surface of a metal foil 23. The electrode sheet includes a coated area 25 where the active material layer 24 is applied and a non-coated area 26 where the active material layer 24 is not applied. The anode sheet is provided with a non-coated area 26 on one side in the widthwise direction, and the cathode sheet is provided with a non-coated area 26 on the other side in the widthwise direction.

The non-coated area 26 is exposed or protrudes from the laminate in the widthwise direction. The non-coated area 26 itself functions as an electrode tab 27.

Notches may be formed at predetermined intervals in the non-coated area 26 to form notched tabs 27 in the form of a flag.

In the embodiment, the notched tabs 27 are illustrated in the shape of an equilateral trapezoid. However, the notched tabs 27 may have various shapes such as semicircular, semielliptical, triangular, rectangular, parallelogram, etc.

Additionally, in the embodiment, the notched tabs 27 having the same width arranged in the lengthwise direction are exemplified. However, the width of the notched tabs may gradually widen from the core side to the outer circumferential side.

In addition, in the embodiment, the height of the notched tabs 27 gradually increases from the core side to the outer circumferential side. However, the height of the notched tabs may be constant or gradually decrease.

In addition, in the embodiment, a structure in which the notched tabs 27 are removed in predetermined sections of the centripetal end and the distal end of the non-coated area 26 is exemplified. However, it is apparent that the notched tabs may not be removed from the centripetal end of the non-coated area, and the notched tabs may not be removed from the distal end of the non-coated area.

In the jelly-roll shaped electrode assembly 20, the notched tabs 27 may be bent in radial direction and flattened, as shown in FIG. 4. The notched tabs 27 may be bent inward or outward in radial direction. In the embodiment, a structure in which the notched tabs 27 are bent inward in radial direction is illustrated.

The notched tabs 27 may be bent one by one in the process of forming the jelly-roll shaped electrode assembly 20 by winding the laminate. Alternatively, the notched tabs 27 may be formed by bending the same all at once after winding the laminate to form a jelly-roll shaped electrode assembly.

The notched tabs 27 of the first electrode 21 and the notched tabs 27 of the second electrode 22, which are bent and overlapped in radial direction as described above, may provide a plane substantially perpendicular to the axial direction at each of both axial ends of the electrode assembly 20.

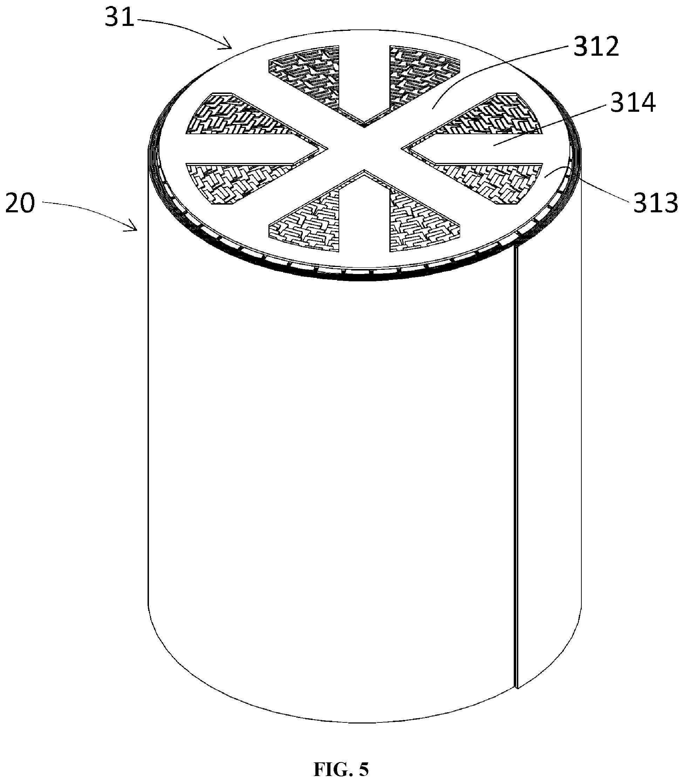

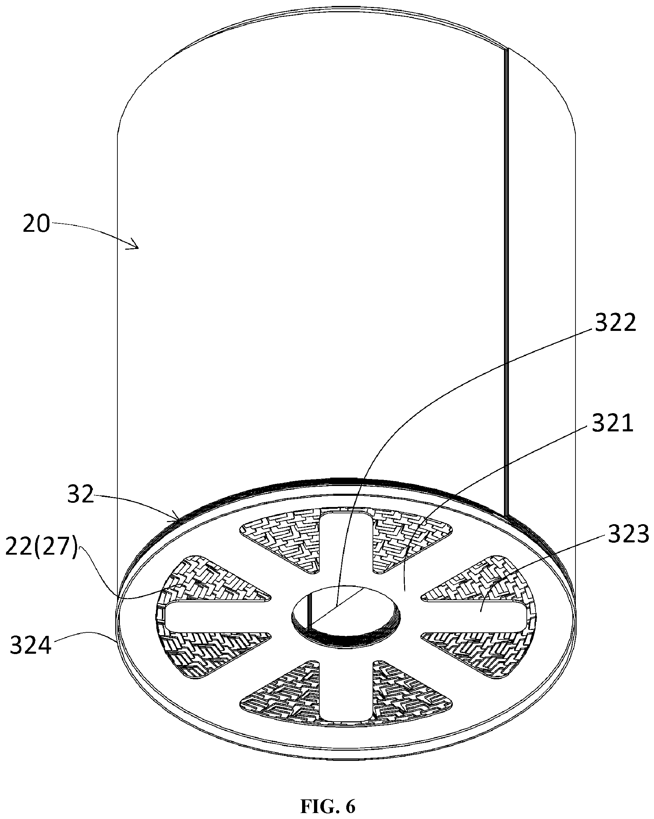

A first current collector plate 31 and a second current collector plate 32 may be bonded to the substantially flat surface provided by bending the notched tab 27 exposed at the both axial ends of the electrode assembly 20, respectively, as shown in FIGS. 5 and 6.

In an embodiment, the first current collector plate 31 is a cathode current collector plate, and the second current collector plate 32 is an anode current collector plate. The first current collector plate 31 may be made of aluminum, and the second current collector plate 32 may be made of copper.

The current collector plates 31 and 32 may be manufactured by punching, trimming, piercing and bending a metal sheet.

Referring to FIG. 5, the first current collector plate 31 includes a terminal connecting part 312 extending from the center in radial direction, and a ring part 313 connecting the distal edge of the terminal connecting part 312 in the circumferential direction, and an first electrode connecting part 314 extending centripetally from the ring part 313 but not connected to the terminal connecting part 312. The center of the terminal connecting part 312 covers at least a portion of the core hollow portion of the electrode assembly 20.

The first electrode connecting part 314 is bonded to the notched tabs 27 of the first electrode 21 of the electrode assembly 20 using a method such as laser welding before the electrode assembly 20 is inserted into the can 10. The welding line of the laser may extend radially.

Referring to FIG. 6, the second current collector plate 32 defines a hole 322 corresponding to the core hollow portion of the electrode assembly 20 and includes an inner ring part 321 surrounding the core hollow portion, an second electrode connecting part 323 extending radially from the inner ring part 321, a second terminal connecting part disposed on a more distal side than the second electrode connecting part 323 and connected to the inner ring part 321. The second terminal connecting part has an outer ring shape surrounding the edge of the second current collector plate 32.

The second electrode connecting part 323 is bonded to the notched tabs 27 of the second electrode 22 of the electrode assembly 20 by laser welding, etc., before the electrode assembly 20 is inserted into the can 10. The welding line of the laser may extend radially.

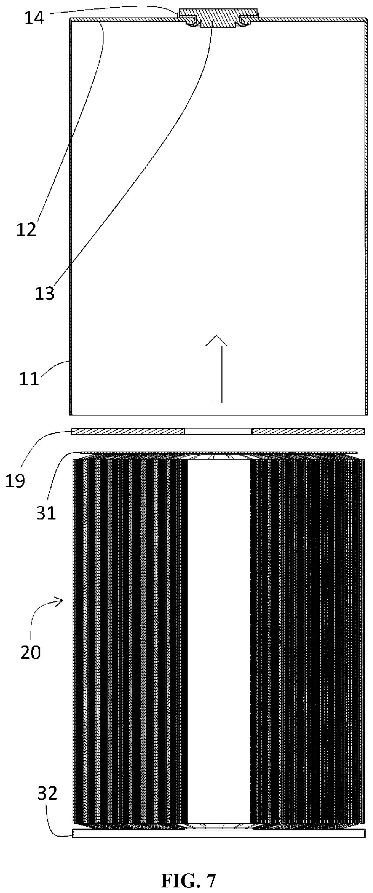

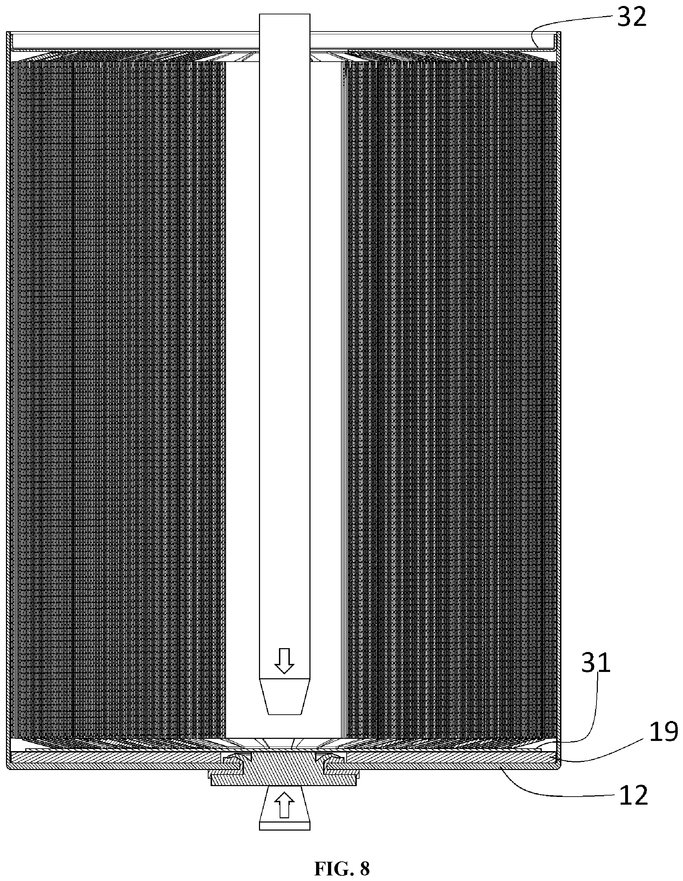

As shown in FIGS. 7 and 8, the electrode assembly 20 is accommodated in the can 10 with the first current collector plate 31 aligned to face the bottom member 12 of the can 10. Here, an insulator 19 is interposed between the first current collector plate 31 and the bottom member 12 of the can 10 to electrically insulate the first current collector plate 31 and the bottom member 12.

Additionally, the terminal connecting part 312 of the first current collector plate 31 is bonded to the first electrode terminal 13 fixed to the can 10 by resistance welding, ultrasonic welding or laser welding. The welding device for welding the first current collector plate 31 and the first electrode terminal 13 may perform welding by accessing the back side of the center of the terminal connecting part 312 of the first current collector plate 31 from the open end of the can 10 through the core hollow part of the electrode assembly 20. Apparently, in addition to the above-described welding method, the first current collector plate 31 and the first electrode terminal 13 may be bonded by brazing or soldering. That is, various bonding method may be applied as long as the first current collector plate 31 and the first electrode terminal 13 are fixed to and electrically connected to each other.

However, the present invention does not exclude a structure wherein the anode tab is directly electrically connected to the positive terminal without the anode current collector plate.

With the electrode assembly 20 accommodated in the can 10, the electrode tab 27 of the second electrode 22 and the second current collector plate 32 are arranged to face the open end of the sidewall member 11.

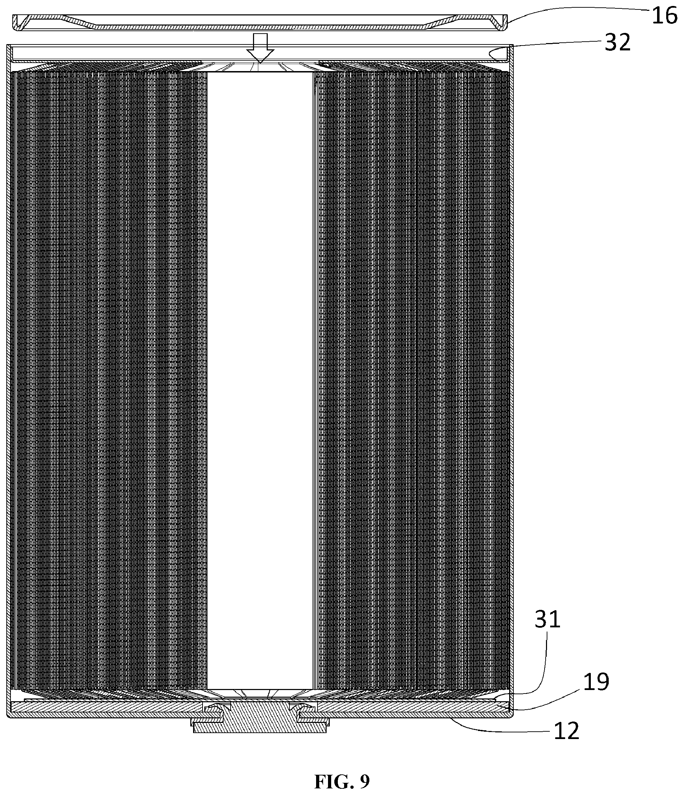

After the first current collector plate 31 and the first electrode terminal 13 are bonded, the electrolyte solution may be injected into the can 10. After injecting the electrolyte solution, the open end of the sidewall member 11 is covered and closed with a cap 40, as shown in FIG. 9.

Apparently, the welding structure of the present invention may also be applied when the open end is first covered by the cap 40, then the electrolyte solution is injected and the liquid injection port of the cap 40 is closed.

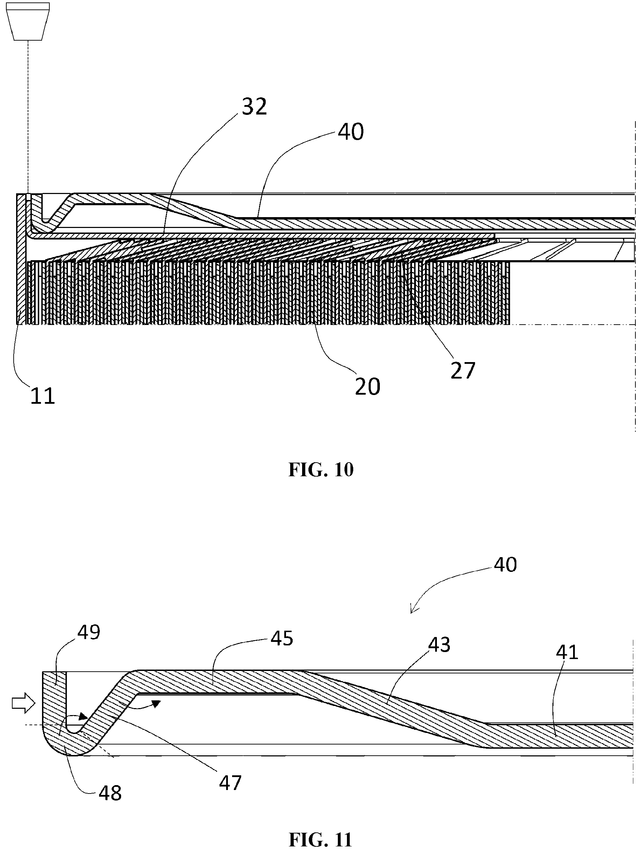

As shown in FIG. 10, the edge of the cap 40 is bonded to the edge of the sidewall member 11 by seam welding with a laser, and thus the can 10 may be sealed.

Hereinafter, the welding structure of the can and cap according to the present invention will be described in detail with reference to FIGS. 10 to 14.

The second current collector plate 32 includes: a second electrode connecting part 323 in contact with and electrically connected to the electrode tab 27 of the second electrode 22 of the electrode assembly 20; and a second terminal connecting part 324 in contact with and electrically connected to the inner circumferential surface of the sidewall member 11.

The second electrode connecting part 323 may have a circular plate structure extending in radial direction. The bottom surface of the second electrode connecting part 323 may be welded to the surface of the second electrode tab 27 using a method such as laser welding.

The second terminal connecting part 324 extends toward axial outer side from the bent part 328 provided at the radial outer edge of the second electrode connecting part 323.

The material of the second current collector plate 32 may be softer than that of the sidewall member 11.

When the outer diameter of the second terminal connecting part 324 is set to be slightly larger than the inner diameter of the sidewall member 11, the bent part 328 is elastically deformed in the process of inserting the second current collector plate 32, and the second terminal connecting part 324 is press-fitted into the inner circumferential surface of the sidewall member 11 such that the second terminal connecting part 324 is brought into close contact with the sidewall member 11 in radial direction. Accordingly, with the second current collector plate 32 inserted, the outer diameter of the second terminal connecting part 324 may be equal to the inner diameter of the sidewall member 11.

With the electrode assembly 20 accommodated in the can 10, the second electrode tab 27 and the second current collector plate 32 are arranged to face the open end of the sidewall member 11.

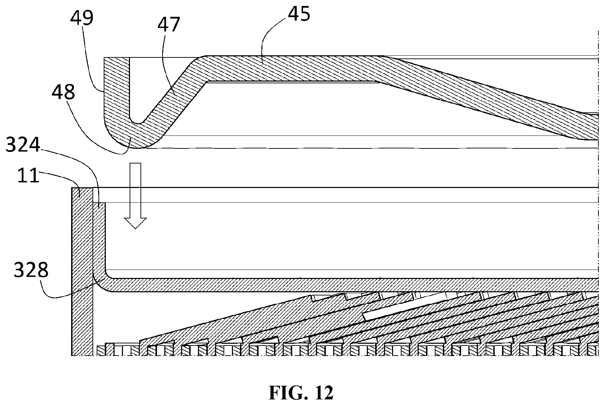

The sidewall member 11 extends axially further outward than the second terminal connecting part 324 of the second current collector plate 32. As a result, the inner circumferential surface of the sidewall member 11 of the can 10 first guides the insertion of the cap 40, and then the inner circumferential surface of the second terminal connecting part 324 of the second current collector plate 32 guides the insertion of the cap 40 as shown in FIG. 12. That is, the above-described structure is not only advantageous for welding, which will be described later, but also guides the insertion of the cap 40 and facilitates center alignment of the cap.

The open end of the sidewall member 11 is covered and closed by a cap 40. The cap 40 is a cover of the open end that has a substantially disk shape. Referring to FIG. 11, the cap 40 includes, from the radial outer side to inner side in order, a contact portion 49, a curved surface portion 48, a first inclined portion 47, a base portion 45, a second inclined portion 43 and a centripetal portion 41.

The contact portion 49 extending in axial direction is provided at the radial outer edge of the cap 40 in a manner that that the outer circumferential surface thereof faces the inner circumferential surface of the sidewall member 11 of the can 10 in radial direction.

With the cap 40 inserted in the can 10, the axial outer edges of the inner circumferential surface of the sidewall member 11 and the outer circumferential surface of the contact portion 49 may be arranged to be at the same height.

At least a portion of the second terminal connecting part 324 in axial direction is interposed between and compressed by the sidewall member 11 and the contact portion 49 in radial direction.

In one embodiment, the axial outer edge of the second terminal connecting part 324 is disposed axially further inward than those of the sidewall member 11 and the contact portion 49.

However, the present invention is not necessarily limited to such height relationship. For example, the height of the axial outer edge of the second terminal connecting part 324 may be the same as the height of the axial outer edge of the sidewall member 11 and/or the height of the axial outer edge of the contact portion 49. Alternately, the axial outer edge of the second terminal connecting part 324 may protrude higher when necessary.

However, when the height of the axial outer edge of the second terminal connecting part 324 is slightly lower than those of the axial outer edges of the sidewall member 11 and the contact portion 49, a kind of groove is provided between the axial outer edges of the sidewall member 11 and the contact portion 49, and the molten metal from the axial outer edges of the sidewall member 11 and the contact portion 49 penetrates into and deposited in the groove such that the axial outer edge of the second terminal connecting part 324 is prevented from being exposed to the outside after welding.

A curved surface portion 48 extending radially inward as approaches axial inner side is connected to the axial inner end of the contact portion 49.

The curved surface portion 48 may be convex downward, that is, the slope of tangent of the outer circumferential surface gradually becomes gentler as it gets farther from the contact portion 49. Since the contact portion 49 extends vertically in axial direction, the slope of tangent of the outer circumferential surface of the curved surface portion 48 may gradually decrease from 90 degrees as it gets farther from the contact portion 49.

The curved surface portion 48 may extend to a point where the slope of tangent is 0 degrees. More preferably, the curved surface portion 48 may extend beyond 0 degrees to an angle where the slope of tangent is equal to the first slope of the first inclined portion 47, which will be described later.

The point where the slope of tangent of the curved surface portion 48 is 0 degrees may be a portion extending to the innermost part of the curved surface portion 48 in axial direction.

The insertion depth of the cap 40 with respect to the open end may be regulated by the axial inner end of the curved surface portion 48, that is, the point where the slope of tangent is 0 degrees interfering with the surface of the second electrode connecting part 323 of the current collector plate 32.

The cap 40 applies pressure to the second terminal connecting part 324 of the second current collector plate 32 in the distal direction, and also applies pressure to the distal edge of the second electrode connecting part 323 of the second current collector plate 32 toward the axial inner side. Accordingly, the second terminal connecting part 324 of the second current collector plate 32 is in close contact with and fixed between the sidewall member 11 and the cap 40.

The second current collector plate 32 by itself, unlike the cap 40, may not have sufficient rigidity to exert an elastic force that strongly compresses the second terminal connecting part 324 thereof to the sidewall member 11.

Therefore, when the cap 40 having higher rigidity than the second current collector plate 32 is designed to have a shape provided with elastic force, the cap 40 may also function as a jig for welding the collector plate 32 to the sidewall member 11 by strongly pressing the cap 40 against the sidewall member 11 as well as by strongly pressing the second current collector plate 32 to the sidewall member 11 with the cap which is required for welding of the second current collector plate 32 and the sidewall member 11.

The cap 40 is provided with a base portion 45 extending horizontally at a location radially inner than the curved surface portion 48. Since the surface of the base portion 45 has a flat ring shape, the base portion 45 acts as a foot for the battery cell when the battery cell shown in FIG. 1 is turned over.

The axial outer side surface of the base portion 45 is disposed at the same height as the axial outer end of the contact portion 49, as shown, or is disposed axially further outward than the axial outer end of the contact portion 49. Therefore, even when the battery cell shown in FIG. 1 is turned over and placed on the floor with the cap 40 in contact with the floor, the welding area of the cap 40 and the can 10 are not directly subjected to the weight of the battery cell, thereby protecting the welding area.

A first inclined portion 47 having a substantially constant first slope and extending axially outward as approaches radially inner side is provided between the curved surface portion 48 and the base portion 45. The first slope of approximately 45 degrees is exemplified in the embodiment. As a result, the angle between the first inclined portion 47 and the contact portion 49 may be approximately 45 degrees.

The cap 40 is provided with a centripetal portion 41 extending horizontally at a location radially inner than the base portion 45. The axial inner side surface of the centripetal portion 41 is disposed axially further outward than the axial inner end of the curved surface portion 48.

Accordingly, when the cap 40 is press-fitted, the curved surface portion 48 may come in contact with the second current collector plate 32 before the axial inner side surface of the centripetal portion 41 comes in contact with the second current collector plate 32. That is, according to the embodiment, the insertion depth of the cap 40 may be regulated by interference between the curved surface portion 48 and the second electrode connecting part 323 of the second current collector plate 32.

A first inclined portion 43 having a substantially constant second slope and extending axially inward as approaches radially inner side is provided between the base portion 45 and the centripetal portion 41. The second slope of approximately 22.5 degrees is exemplified in the embodiment.

The second slope may be smaller than the first slope. Accordingly, when the cap 40 is subjected to a load in radial direction, the two radial ends of the first inclined portion 47 may be more easily deformed than that of the second inclined portion 43. This difference in slope allows the contact portion 49 of the cap 40 to more accurately function as a jig that presses the second terminal connecting part 324 of the second current collector plate 32.

The length of the base portion 45 in radial direction may be more than twice the length of the section occupied by the contact portion 49, the curved surface portion 48 and the first inclined portion 47 in radial direction. As a result, the load applied to the cap 40 in radial direction at the outer circumferential surface of the cap 40 may be concentrated more on the radial outer side section than the base portion 45 since the base portion 45 has relatively higher rigidity in radial direction. Such difference in length also ensures that the contact portion 49 of the cap 40 functions as a jig applying pressure the second terminal connecting part 324 of the second current collector plate 32.

Referring to FIG. 12, when a load is applied to the contact portion 49 toward the radial inner side, the curved surface portion 48 is mainly elastically deformed, and the connecting portion between the first inclined portion 47 and the base portion 45 may be mainly elastically deformed. Additionally, according to such gooseneck structure, since the elastic deformation section is large, the elastic force applied in the direction in which the contact portion 49 is restored toward the radial outer side also acts significantly.

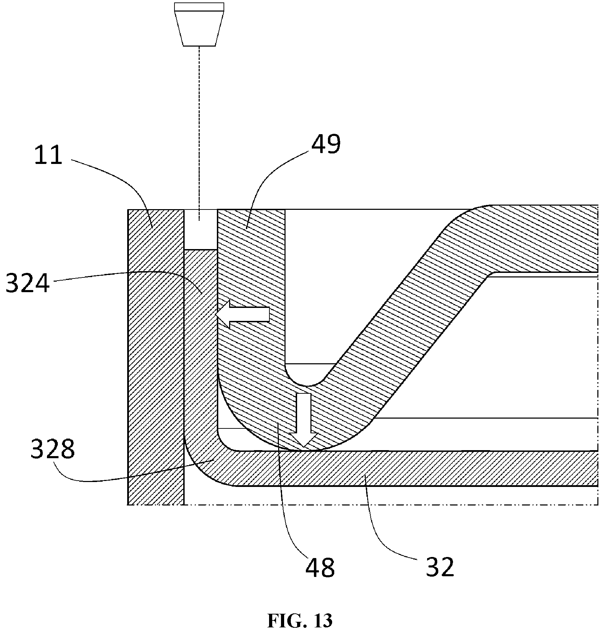

Accordingly, when the cap 40 is press-fitted into the open portion of the can 10, the elastic force of the cap 40 acts in a direction to restore the contact portion 49 toward the radial outer side, and the second terminal connecting part 324 of the second current collector plate 32 is strongly pressed while interposed between the sidewall member 11 and the contact portion 49 as shown in FIG. 13.

In this state, the axial ends of the sidewall member 11 and the contact portion 49 are welded by the laser L irradiated in axial direction as shown in FIG. 13. The irradiation direction of the laser may be parallel to the axial direction.

Accordingly, with at least a portion of the second terminal connecting part 324 in axial direction interposed between the inner circumferential surface of the sidewall member 11 and the outer circumferential surface of the cap 40, the inner circumferential surface of the sidewall member 11 and the outer circumferential surface of the cap 40 are welded to form a weld portion W. Some portion of the second terminal connecting part 324 may also be melted into the weld portion W.

The portion of the sidewall member 11 extending axially further outward and the portion of the contact portion 49 face each other in radial direction with a slight gap therebetween to provide a path which allows the laser irradiated in axial direction to directly reach the second terminal connecting part 324. As a result, the second current collector plate 32 is also heated before excessive heat is generated, thereby facilitating the triple welding of the cap 40, the can 10 and the second current collector plate 32.

In addition, the portion of the sidewall member 11 and the portion of the contact portion 49 extending axially further outward are melted and penetrate into the weld portion W during welding, thereby increasing the strength and volume of the weld portion W.

The sidewall member 11 and the cap 40 may be made of the same metal material, for example, aluminum and steel.

The second current collector plate 32 may be made of the same metal material as the sidewall member 11 and the cap 40. As a result, the second current collector plate 32 may be welded together during the process of welding the sidewall member 11 and the cap 40.

Contrarily, the second current collector plate 32 may be made of a different metal material from the sidewall member 11 and the cap 40, for example, copper.

Then, even the second current collector plate 32 made of different material may be welded together during the process of welding the sidewall member 11 and the cap 40. Even when the welding of the second current collector plate 32 is somewhat poor due to being made of different material, there is no problem with the electrical connection between the current collector plate and the can as the axial ends of the sidewall member 11 and the cap 40 are welded to each other with the current collector plate interposed therebetween.

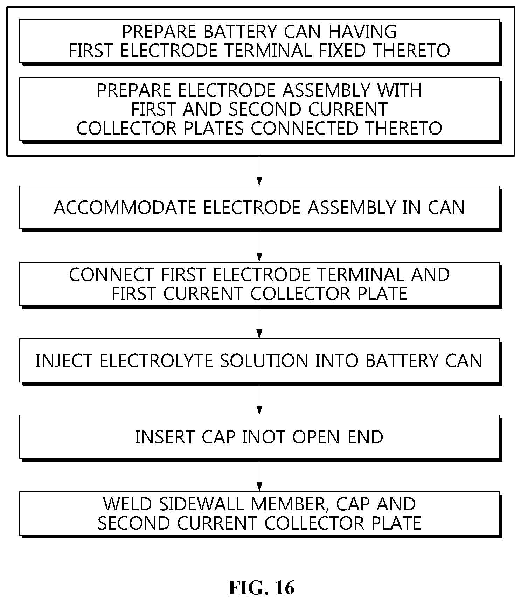

Hereinafter, an embodiment of a manufacturing method of a battery cell according to the present invention will be described with reference to FIG. 16.

First, the first electrode terminal 13 is fixed to the hole provided in the bottom member 12 of the can 10. Here, electrical insulation and sealing of the bottom member 12 and the electrode terminal 13 should be ensured by interposing a gasket 14 therebetween. While the first electrode terminal 13 fixed by riveting with the gasket 14 interposed therebetween is exemplified in the embodiment, various other known methods capable of fixing the first electrode terminal 13 to the bottom member 12 as well as insulation and sealing may be applied apparently.

Thereafter, the electrode assembly 20 having the current collector plates 31 and 32 welded at the two ends thereof is inserted into of a can. As a result, the first current collector plate 31 faces and is brought into contact with the first electrode terminal 13, the second electrode connecting part 323 of the second current collector plate 32 faces the open end, and the second terminal connecting part 324 of the second current collector plate 32 is brought into contact with the inner circumferential surface of the sidewall member 11 of the can 10. In this state, the first current collector plate 31 and the first electrode terminal 13 are welded.

Thereafter, the cap 40 is press-fitted into the open end of the can 10. Since a curved surface portion 48 having outer diameter gradually decreasing as approaches axial inner side is provided at the outer circumferential surface of the cap 40, the second terminal connecting part 324 comes into contact with the contact portion 49 of the cap 40 and is pressed toward the radial outer side as the inner edge of the axial outer end of the second terminal connecting part 324 of the second current collector plate 32 begins to be naturally pressed by the curved surface portion 48. The cap 40 may be inserted until the curved surface portion 48 of the cap 40 comes in contact with and the second electrode connecting part 323 interferes with the cap 40.

Thereafter, the axial ends of the sidewall member 11 of the can 10 and the contact portion 49 of the cap 40 are welded.

In the battery cell according to the embodiment, unlike the battery cell according to the comparative example shown in FIG. 15, the cap 40 serves as a jig when welding the second current collector plate 32 to the can 10 such that a separate space for accommodating a jig in the can is not necessary. Therefore, the energy density with respect to the volume of the battery cell may be increased without wasting the inner space of the can 10.

In addition, in the battery cell according to the embodiment, unlike the battery cell according to the comparative example shown in FIG. 15, the process of welding the second current collector plate 32 to the can 10 by the axial ends of the sidewall member 11 and the cap 40 with the second current collector plate 32 interposed therebetween and the process of welding the cap 40 to the sidewall member 11 are performed in a single welding process. Therefore, the production efficiency of cylindrical battery cells may be increased and the production cost may be reduced.

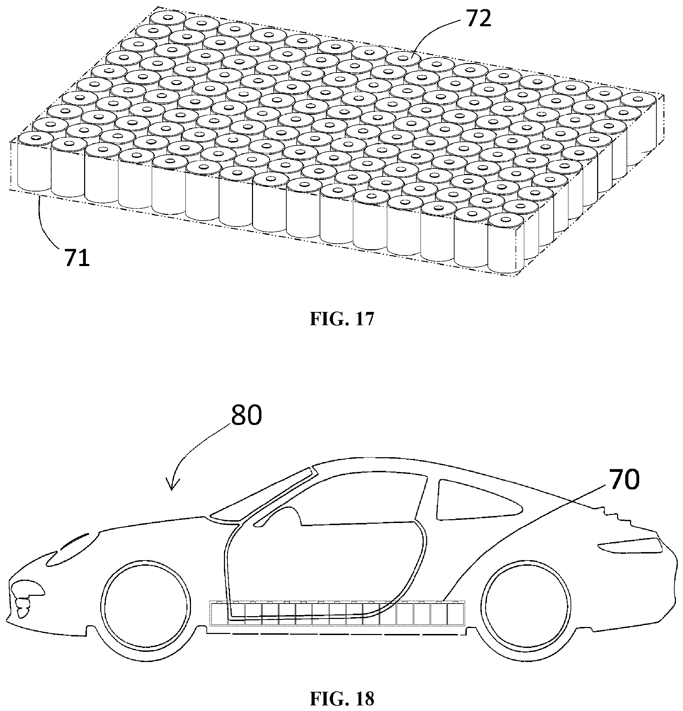

The battery cell 72 manufactured using the welding structure and the welding process described above may be accommodated in the housing 71 of the battery pack 70 as shown in FIG. 17. The battery pack 70 may be constructed using a battery module, which is an intermediate form of assembly, or, as shown, directly without a battery module.

Since the above-described battery cell 72 has a large volume, there is no particular difficulty in embodying the battery pack 70 even without using an intermediate structure called a battery module. And the battery cell 72 has low internal resistance and high energy density. Accordingly, the energy density of the battery pack 70 including the battery cell 72 may be embodied even higher.

The battery pack 70 with such increased energy density is capable of storing the same amount of energy with reduced volume and weight. Therefore, when the battery pack 70 with the battery cell 72 applied thereto is mounted on a vehicle such as the vehicle 80 shown in FIG. 18 that uses electricity as an energy source, the driving range of the vehicle with respect to energy may be further expanded.

According to the present invention, when welding the current collector plate provided at the open end of the can to the can, the cap functions as a jig such that a separate space for accommodating the jig is not necessary to prevent wasting of the inner space of the can, thereby increasing the energy density with respect to the volume of the battery cell.

In addition, according to the present invention, the process of welding the current collector plate to the can and the process of the cap to the sidewall member are performed in a single welding process by welding the axial ends of the sidewall member and the cap with the current collector plate interposed between the sidewall member and the cap, thereby increasing the production efficiency of cylindrical battery cells and reducing the production cost.

Additionally, according to the present invention, since the current collector plate is in strong close contact with the weld portion of the can and the cap, the heat generated during the welding of the can and the cap is dissipated through the current collector plate such that the welding heat is conducted through the sidewall member, thereby preventing or minimizing the thermal damage to the separator of the electrode assembly.

Additionally, according to the present invention, welding is performed with the current collector plate strongly compressed between the can and the cap such that the current collector plate functions as a barrier that prevents the welding laser from entering the cap.

In addition to the advantageous effects described above, specific effects of the present invention will be described further while describing specific details of the present invention.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell comprising: a can having a sidewall member extending in axial direction; an electrode assembly accommodated in the can; and a cap covering an open end provided at one axial end of the sidewall member, wherein
a terminal connecting part extending toward axial outer side and in contact with and electrically connected to an inner circumferential surface of the sidewall member is provided at a radial outer edge of a current collector plate connected to an electrode of the electrode assembly and disposed at the open end, and
a weld portion where the inner circumferential surface of the sidewall member and an outer circumferential surface of the cap are welded with at least a portion of the terminal connecting part interposed therebetween.

2. The battery cell of claim 1, wherein the current collector plate comprises an electrode connecting part connected to the electrode of the electrode assembly and extending in radial direction,
the terminal connecting part is disposed radially further outward than the electrode connecting part, and
the terminal connecting part and the electrode connecting part are connected through a bent part provided at a lower end portion of the terminal connecting part and changing an extending direction of the current collector plate.

3. The battery cell of any one of claims 1 and 2, wherein the sidewall member extends axially further outward than the terminal connecting part of the current collector plate.

4. The battery cell of claim 3, wherein a diameter of an inner circumferential surface of a portion of the sidewall member extending axially further outward than the terminal connecting part of the current collector plate is larger than that of an inner circumferential surface of the terminal connecting part.

5. The battery cell of any one of claims 1 to 4, wherein the outer circumferential surface of the cap is in contact with an inner circumferential surface of the terminal connecting part.

6. The battery cell of claim 5, wherein a contact portion extending in axial direction and having an outer circumferential surface facing the inner circumferential surface of the sidewall member in radial direction is provided at an edge of the cap.

7. The battery cell of claim 6, wherein the contact portion extends axially further outward than the terminal connecting part of the current collector plate.

8. The battery cell of any one of claims 6 and 7, wherein a diameter of an outer circumferential surface of a portion of the contact portion extending axially further outward than the terminal connecting part of the current collector plate is smaller than that of an outer circumferential surface of the terminal connecting part.

9. The battery cell of any one of claims 6 to 8, wherein the weld portion is formed by welding at least an axial outer edge of the inner circumferential surface of the sidewall member, an axial outer edge of an outer circumferential surface of the contact portion, and an axial outer edge of the terminal connecting part.

10. The battery cell of any one of claims 6 to 9, wherein a curved surface portion having a curved shape convex toward axial inner side is connected to an axial inner side of the contact portion, and
an axial inner end of the curved surface portion regulates an insertion depth of the cap into the open end by axially interfering with the current collector plate.

11. The battery cell of claim 10, wherein a base portion extending flatly in radial direction is provided at the cap to be radially inner than the curved surface portion, and
the curved surface portion and the base portion are connected through a first inclined portion extending axially outward as approaches radial inner side.

12. The battery cell of claim 11, wherein an axial outer side surface of the base portion protrudes axially further outward than the sidewall member and the contact portion.

13. The battery cell of any one of claims 11 and 12, wherein a centripetal portion extending in radial direction is provided at the cap to be radially inner than the base portion, and
the base portion and the centripetal portion are connected through a second inclined portion extending axially inward as approaches radial inner side.

14. The battery cell of claim 13, wherein the second inclined portion has a slope gentler than the first inclined portion.

15. The battery cell of any one of claims 6 to 14, wherein an axial outer edge of the terminal connecting part is disposed axially further inward than an axial outer edge of the sidewall member and an axial outer edge of the contact portion.

16. A manufacturing method of a battery cell of any one of claims 1 to 15, comprising:
inserting a current collector plate into a can in a manner that an outer circumferential surface of a terminal connecting part of the current collector plate comes in contact with an inner circumferential surface of a sidewall member;
inserting a cap into the can in a manner that an outer circumferential surface of the cap comes in contact with an inner circumferential surface of the terminal connecting part of the current collector plate inserted in the can; and
forming a weld portion by irradiating a laser in axial direction onto an area where an outer circumferential surface of the sidewall member faces an inner circumferential surface of the can.
